# EUROPEAN PATENT SPECIFICATION

(11) **EP 3 208 969 B1**
(45) Date of publication and mention of the grant of the patent: **09.01.2019**
(21) Application number: 16305191.5
(22) Date of filing: 19.02.2016
(51) Int. Cl.: H04L 12/10, H04L 12/40, G06F 1/32, G06F 1/26, H04M 19/08

(54) **POWER CONTROL SYSTEM AND METHOD**
ENERGIEKONTROLLSYSTEM UND VERFAHREN
SYSTÈME ET PROCÉDÉ DE COMMANDE DE PUISSANCE

(43) Date of publication of application: 23.08.2017
(73) Proprietor: Alcatel Lucent, 91620 Nozay (FR)
(72) Inventor: Vandelannoote, Giovanni, 2018 Antwerp (BE); De Vleeschauwer, Eric, 2018 Antwerp (BE)
(74) Representative: Nokia EPO representatives

(56) References cited:
- EP-A1- 2 830 302
- WO-A1-2009/070171
- GB-A- 2 462 312

## Description

### Field of Invention

The present disclosure relates to power control. Particular embodiments relate to a power control system, a controller, a method, and a computer program product, for controlling reverse power feeding of a network node and a network node comprising the power control system.

### Background

Telecommunications equipment devices, which may for ease be herein referred to as network nodes, such as cabinets or distribution point units, DPUs, are being installed remote from a central office - that is, they are typically installed closer to customer premises than to the central office. Several approaches have been developed for powering such network nodes.

A first approach has been to provide power to the network node from the central office. However, the distance between the central office and the respective network nodes may be great, which may lead to power delivery inefficiencies.

A second approach has been to provide power to the network node from a local power supply. However, it may be difficult or expensive to provide a local power supply for each network node, for example if no mains connection is available yet.

A third approach has been developed, and is called reverse power feeding. Reverse power feeding is in the process of standardization by the European Telecommunication Standards Institute, ETSI, and the Broadband Forum - in particular in ETSI RTS 101 548, and in BBF TR-301 and wt-338, respectively. In reverse power feeding, the network node may draw power from nearby (for example up to 250 m) customer premises equipment, CPE, devices.

EP 2 830 302 A1 discloses a reverse powering system for a telecommunications node, wherein a customer premises equipment, CPE, device is provided with a battery to maintain service in the event of failure of a power input, and wherein a distribution point unit, DPU, is provided with a battery and a power combiner to maintain service in the event of failure of the CPE device or of an electrical drop wire carrying communication data, and wherein respective power management systems are present to control the flow of electrical power between the various electrical components.

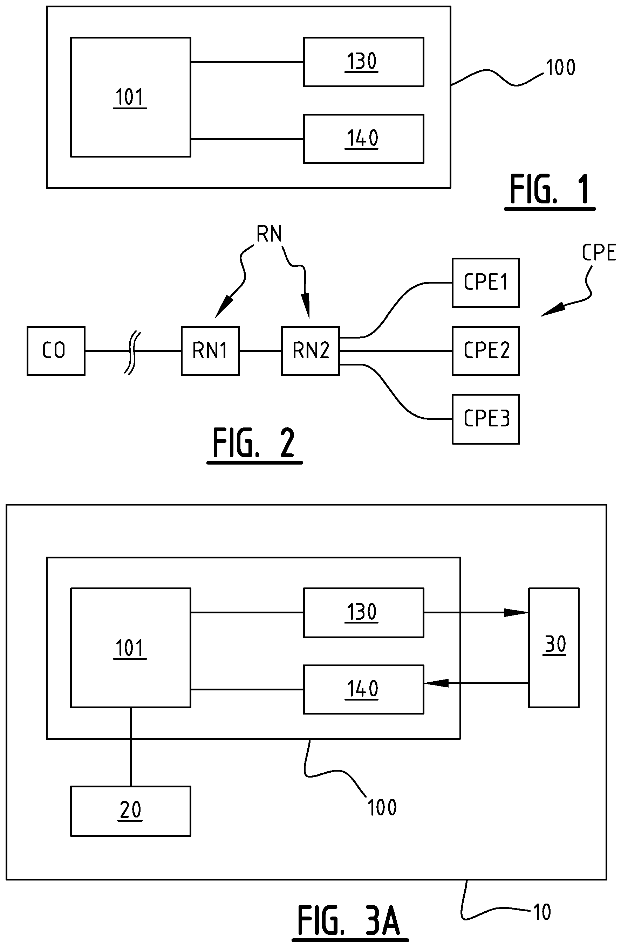

GB 2462312 A discloses a power control system arranged for use in a power-over-Ethernet system comprising a battery, a battery charging unit connected to, and for charging, the battery and a processor arranged to monitor the charge level of the battery and, in response, to direct current to, or away from, the battery, and, with reference to Figure 2 thereof, wherein current supplied by a power sourcing equipment is measured, it is determined whether or not a load requires additional current, if so, a limited amount of current is supplied to the load from the battery, if not, it is determined whether any excess current is being supplied by the power sourcing equipment, if so, the charge level of the battery is measured, and if the battery is not fully charged, excess charged is directed to the battery; else, if no excess current is being supplied or if the battery is fully charged, or after excess charge is directed to the battery, operation is repeated.

### Summary

Embodiments of the present disclosure aim to control reverse power feeding of a remote network node from a number of CPE devices. Particular embodiments of the present disclosure aim to improve size requirements for energy storage devices used in such network nodes.

According to a first aspect of the present disclosure there is provided a power control system according to claim 1.

In this manner, direction of power from and to the energy storage device may be controlled, based on a number of readily available parameters - to wit: power drawn from the number of CPE devices; operating power for the power consuming system; and available energy in the energy storage device. In particular, use of these parameters allows effective control of power delivered from the number of CPE devices to the network node (in particular, to the power consuming system and to the energy storage device), and allows prolonged operation of the power consuming system even when insufficient instantaneous power can be delivered by the number of CPE devices.

It will be understood by the skilled person that the charger power converter and the discharger power converter are described herein as two entities for the sake of clarity, but that practical implementations may combine the functionality of both into a single converter entity.

According to various embodiments of the present disclosure, the controller is configured for activating the discharger power converter if the first input is greater than a first reference value or if the second input is less than a second reference value. In a preferred embodiment, the first reference value pertains to power that may be safely drawn from the number of CPE devices, in accordance with the power delivery conditions. In another preferred embodiment, the second reference value pertains to desirable operating power of the power consuming system. The first and second reference values may be chosen to be equal, but need not be.

In this manner, if there is too much power being drawn from the number of CPEs in view of the first reference value, or if the operating power for the power consuming system is too high (i.e. if the second input is too low, in a preferred embodiment wherein the second input varies inversely with the operating power of the power consuming system) in view of the second reference value, the discharger power converter may be activated, and thus power may be directed from the energy storage device to the power consuming system.

In a further developed embodiment, the controller is configured for activating the discharger power converter if the first input is greater than a first reference value and if the second input is less than a second reference value.

According to various embodiments of the present disclosure, the controller is configured for controlling the discharger power converter to regulate the power being directed from the energy storage device based on a difference between at least one input of the first and second inputs and its corresponding reference value of the first and second reference values. In a particular embodiment, the controller is configured to increase the power being directed from the energy storage device if either or both differences increase, and vice versa.

In this manner, power may be directed from the energy storage device to the power consuming system in a controller manner, taking into account how much the first input differs from the first reference value, and/or how much the second input differs from the second reference value.

According to various embodiments of the present disclosure, the controller is configured for activating the charger power converter if the first input is less than a fourth reference value. Additionally (or alternatively), the controller is configured for activating the charger power converter if the third input is less than a third reference value. In a preferred embodiment, the fourth reference value pertains to power that may be safely drawn from the number of CPE devices, in accordance with the power delivery conditions. In another preferred embodiment, the third reference value pertains to a desirable amount of energy to be stored in the energy storage device. The third and fourth reference values may either or both be chosen to be equal to either or both of the first and second reference values, but need not be.

In this manner, if there is not too much power being drawn (i.e. there is sufficient available power) from the number of CPE devices in view of the fourth reference value, and/or if there is insufficient available energy in the energy storage device in view of the third reference value, the charger power converter may be activated, and thus power may be directed from the number of CPE devices to the energy storage device. It will be understood by the skilled person that energy storage devices may leak power continuously, and therefore may be charged continuously - therefore, if there is not enough available energy in the energy storage device in view of the fourth reference value, the controller may be configured for activating the charger power converter in order to direct power from the number of CPE devices to the energy storage device.

According to various embodiments of the present disclosure, the controller is configured for controlling the charger power converter to regulate the power being directed to the energy storage device based on a difference between at least one input of the first and third inputs and its corresponding reference value of the fourth and third reference values. In a particular embodiment, the controller is configured to reduce the power being directed to the energy storage device is either or both differences increase, and vice versa.

In this manner, power may be directed to the energy storage device from the number of CPE devices in a controller manner, taking into account how much the first input differs from the fourth reference value, and/or how much the third input differs from the third reference value.

According to various embodiments of the present disclosure, the controller is configured for directing (or causing to direct) to the power consuming system a first part of power and a second part of power, if the first input is greater than a fifth reference value, the first part of power stemming from the power drawn from the number of CPE devices and the second part of power stemming from the available energy in the energy storage device, such that the sum of the first part of power and the second part of power satisfies the operating power for the power consuming system. Additionally or alternatively, the controller is configured for directing simultaneously a first part of power to the power consuming system and a second part of power to the energy storage device, if the first input is less than the fifth reference value, both the first part of power and the second part of power stemming from the power drawn from the number of CPE devices. In a preferred embodiment, the fifth reference value pertains to power that may be safely drawn from the number of CPE devices, in accordance with the power delivery conditions. The fifth reference values may be chosen to be equal to any or all of the first, second, third and fourth reference values, but need not be.

In this manner, if there is too much power being drawn from the number of CPEs in view of the fifth reference value, power may be provided to the power consuming system both from the power sources (i.e. the CPE devices) and from the energy storage device. In other words, energy is released in a controlled way, rather than in an all or nothing way from only the energy storage device. Further, if there is not too much power being drawn from the number of CPEs in view of the fifth reference value, power may be provided both to the power consuming system and to the energy storage device, from the power sources (i.e. the CPE devices).

In a further developed embodiment, which is currently preferred, the second part of power is directed to the energy storage device using a variable charging current. In another further developed embodiment, the charging current may be varied as a function of the power drawn from the number of CPE devices, and/or as a function of the operating power for the power consuming system. In this manner, charging time for the energy storage device may be reduced.

According to various embodiments of the present disclosure, the first input relates to a voltage representing the or the greatest power delivered by the number of CPE devices. Additionally or alternatively, the second input relates to a voltage representing the required operating power for the power consuming system. Additionally or alternatively, the third input relates to a voltage representing the available energy in the energy storage device (i.e. the available energy that is stored in the energy storage device and that can be output as power).

In this manner, voltages, which are easy to determine and to manipulate, may be used to control operation of the power control system.

According to another aspect of the present disclosure, there is provided a network node according to claim 7.

It will be understood by the skilled person that the features and advantages disclosed hereinabove with respect to various embodiments of the power control system may also apply, *mutatis mutandis,* to various embodiments of the network node.

According to another aspect of the present disclosure, there is provided a method according to claim 8.

It will be understood by the skilled person that the features and advantages disclosed hereinabove with respect to various embodiments of the power control system may also apply, *mutatis mutandis,* to various embodiments of the method.

According to various embodiments of the present disclosure, the method comprises directing power from the energy storage device to the power consuming system if the first input is greater than a first reference value or if the second input is less than a second reference value.

According to various embodiments of the present disclosure, the method comprises regulating the power being directed from the energy storage device based on a difference between at least one input of the first and second inputs and its corresponding reference value of the first and second reference values.

According to various embodiments of the present disclosure, the method comprises directing power from the number of CPE devices to the energy storage device if the first input is less than a fourth reference value and if the third input is less than a third reference value.

According to various embodiments of the present disclosure, the method comprises regulating the power being directed to the energy storage device based on a difference between at least one input of the first and third inputs and its corresponding reference value of the fourth and third reference values.

According to various embodiments of the present disclosure, the method comprises directing to the power consuming system a first part of power and a second part of power, if the first input is greater than a fifth reference value, the first part of power stemming from the power drawn from the number of CPE devices and the second part of power stemming from the available energy in the energy storage device, such that the sum of the first part of power and the second part of power satisfies the operating power for the power consuming system. Additionally or alternatively, the method comprises directing simultaneously a first part of power to the power consuming system and a second part of power to the energy storage device, if the first input is less than the fifth reference value, both the first part of power and the second part of power stemming from the power drawn from the number of CPE devices.

In a further developed embodiment, the second part of power is directed to the energy storage device using a variable charging current. In another further developed embodiment, the charging current may be varied as a function of the power drawn from the number of CPE devices, and/or as a function of the operating power for the power consuming system.

According to various embodiments of the present disclosure, at least two, preferably at least three, more preferably at least four, most preferably all five of the first, second, third, fourth and fifth reference values are equal to each other.

According to various embodiments of the present disclosure, the first input relates to a voltage representing the or the greatest power delivered by the number of CPE devices. Additionally or alternatively, the second input relates to a voltage representing the required operating power for the power consuming system. Additionally or alternatively, the third input relates to a voltage representing the available energy in the energy storage device (i.e. the available energy that is stored in the energy storage device and that can be output as power).

In this way, certain operations of directing power may be arranged to take place simultaneously, or to take place exclusively from each other.

According to various embodiments of the present disclosure, at least one of the first, second, third, fourth and fifth reference values is chosen to be less than a maximum safety value prescribed by the power delivery conditions.

In this way, safety guarantees are improved even if power demand is high.

According to another aspect of the present disclosure, there is provided a controller according to claim 15.

It will be understood by the skilled person that the features and advantages disclosed hereinabove with respect to various embodiments of the power control system may also apply, *mutatis mutandis,* to various embodiments of the controller.

According to yet another aspect of the present disclosure, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the computer program product.

According to yet another aspect of the present disclosure, there is provided a digital storage medium encoding a computer-executable program of instructions to perform, when executed on a computer, the steps of the method of any one of the method embodiments described above.

It will be understood by the skilled person that the features and advantages disclosed hereinabove with respect to embodiments of the method may also apply, *mutatis mutandis,* to embodiments of the digital storage medium.

According to yet another aspect of the present disclosure, there is provided a device programmed to perform a method comprising the steps of any one of the methods of the method embodiments described above.

According to yet another aspect of the present disclosure, there is provided a method for downloading to a digital storage medium a computer-executable program of instructions to perform, when executed on a computer, the steps of the method of any one of the method embodiments described above.

It will be understood by the skilled person that the features and advantages disclosed hereinabove with respect to embodiments of the method for queueing packets may also apply, *mutatis mutandis,* to embodiments of the method for downloading.

Further aspects of the present disclosure are described by the dependent claims. The features of any of the independent claims and any features of other dependent claims may be combined as considered appropriate to the person of ordinary skill in the art, and not only in the particular combinations as defined by the claims.

### Brief description of the figures

The accompanying drawings are used to illustrate presently preferred non-limiting exemplary embodiments of devices of the present disclosure. The above and other advantages of the features and objects of the present disclosure will become more apparent and the present disclosure will be better understood from the following detailed description when read in conjunction with the accompanying drawings, in which:
Figure 1 schematically illustrates an embodiment of a power control system according to the present disclosure;
Figure 2 schematically illustrates a deployment setup for reverse power feeding of one or more embodiments of network nodes according to the present disclosure, including a power control system according to the present disclosure, e.g. the power control system shown in Figure 1;
Figure 3A schematically illustrates an embodiment of a network node according to the present disclosure, e.g. a network node of one of the network nodes shown in Figure 2;
Figure 3B schematically illustrates a circuit layout of an embodiment of a controller according to the present disclosure, e.g. the controller shown included in the power control system embodiment of Figure 1;
Figure 3C schematically illustrates a circuit layout of another embodiment of a controller according to the present disclosure, e.g. the controller shown included in the power control system embodiment of Figure 1;
Figures 4A-D schematically illustrate (parts of) flowcharts of embodiments of methods according to the present disclosure; and
Figures 5A-B schematically illustrate plots showing power control, e.g. as performed by the power control system embodiment of Figure 1.

### Description of embodiments

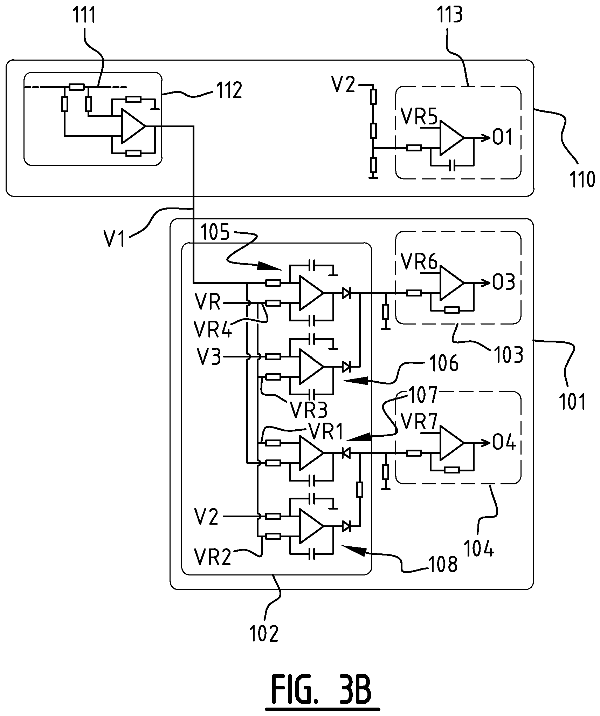

The present disclosure relates to power control, more in particular to storing energy in (i.e. charging, or directing power to) and releasing energy from (i.e. discharging, or drawing power from) an energy storage device of a network node, preferably in a controlled manner. The energy storage device may e.g. be a battery, a single cell or an array of cells, one or more capacitors, one or more super-capacitors, and the like. The energy storage device may draw power (i.e. be chargeable) from one or more customer premises equipment, CPE, devices. In various examples, each CPE device may comprise a power source equipment device for injecting power, e.g. using a power splitter, into a line (e.g. line 111 of Figures 3B-C) coupling the CPE device and the remote network node. In the remote network node, another power splitter on the network node side may separate the power and any communication signals transmitted via the line. The separated power from the power splitter may be extracted by a power extractor (e.g. power extractor 110 of Figures 3B-C), and may be provided to a power supply unit for combining the power from the power extractor and from other power extractors (e.g. power extractor 120 of Figures 3B-C) of other lines, and may be converted into proper voltage levels for powering (components of) the remote node.

Each CPE device may have a specific maximum power limit - which may be identical for multiple CPE devices or which may differ for different CPE devices - and may provide power to a power consuming system - which may be a system with constant or variable power consumption - while benefitting from the power drawn from the or each power source.

A problem may arise in reverse power feeding of network nodes that are installed remote from their central office, such as cabinets, digital subscriber line access multiplexers, DSLAMs, or distribution point units, DPUs - assuming that the CPE devices are capable of powering the network node(s) at all. In particular, specific limits may apply to source power delivered from the CPE devices, for example in the form of a maximum safety power envelope - in other words, the or each CPE device may be subject to power delivery conditions, for example restricting the amount of power that may safely be delivered from the or each CPE device or from at least some CPE devices. Violation of the power limit may result in disconnection of the source power, or in graceful reduction of its power delivery.

In order to better aid understanding, an example for comparison can be given of laptop battery charging - where the battery charging current is adapted to maintain an overall maximum wall adapter current; for a laptop battery, discharging happens in an all or nothing, unregulated fashion.

In an example embodiment, the storing rate - at which energy is stored - may be limited to a fixed value, configured to not exceed the allowed source power(s) under any load conditions of the power consuming system. This configuration may imply a reduced maximum power budget for the power consuming system (or increased maximum source power limit). Minimizing this power budget reduction may imply a slow storing rate, and/or a long storing time.

A situation may occur wherein the power required by the power consuming system exceeds the (safely) available power from the power source(s), for example if one or more of the CPE devices stop delivering power (for example because it or they is or are disconnected by their proprietor). In absence of a power control system, when a given CPE device's power output rises, the maximum output power limit(s) of that power source could be violated before any energy release of the energy storage device takes place, which may lead to disconnection of that power source, and thus to increasing demand on other power sources (i.e. CPE devices). This may in turn cause an avalanche effect, because remaining CPE devices must deliver more power, leading to disconnection of one or more other CPE devices This may imply a suboptimal usage of the available power from the power source(s). This may further imply a greater size of the energy storage device, as the energy storage device should then be able to deliver the total system power.

Embodiments according to the present disclosure therefore aim to use a (combined) power measurement of the source power(s) to regulate the rate at which energy is stored or released. The maximum source power may be configured to not violate the specific source power limit(s), by means of one or more reference value(s), as will be further explained below. The power control system may be configured to adapt the storage / release rate to keep the source power(s) at or near the (corresponding) maximum power limit. This allows the energy storage device to be charged as fast as possible and to release only the extra operating power by the power consuming system that cannot or can not safely be delivered by the power source(s). Therefore, available source power(s) are efficiently utilized.

Moreover, when energy is released from the energy storage device, the released energy may be reduced or even minimized for a given time interval. This may imply a reduced or even minimal required storage capacity for the energy storage device.

A network node can be subject to temporary interrupts of the power feeding when its power source(s) - its served CPE devices - are disconnected. Therefore, local energy storage may be required when the network node should continue normal operation in the presence of these temporary power interrupts.

In addition, a network node (connected to multiple power sources) can be subjected to scaling of the overall power consumption depending upon the availability of the number of power sources - consumers are known to disconnect CPE devices from mains power.

In order to use the stored energy efficiently, the power control system may be configured to arrange the energy storage device to only deliver the extra power that is demanded by the power consuming system, and that cannot or cannot safely be delivered by the power source(s).

By bringing the charging rate of the storage device to such a level that the input power of the network node reaches its maximum allowed level, the charging rate may be more efficient, preferably regardless of the system's actual power consumption. This may imply an increase in the robustness of the system against temporary power interrupts.

Figure 1 schematically illustrates an embodiment of a power control system 100 according to the present disclosure. Power control system 100 is suitable for controlling reverse power feeding of a network node (not shown in Figure 1 - the network node may be e.g. one or more of network nodes RN as shown in Figure 2, or e.g. network node 10 as shown in Figure 3A) from a number of customer premises equipment, CPE, devices (e.g. the CPE devices as shown in Figure 2). The number of CPE devices is subject to power delivery conditions (also called a maximum safety power envelope), which means that their respective source power output is subject to limitations. The network node (not shown) may be installed remote from its central office (shown as CO in Figure 2) - in other words, the network node may be situated closer to customer premises than to the central office. The network node (not shown) may comprise a power consuming system 20 and an energy storage device 30 (both shown in Figure 3A). Power control system 100 is shown comprising charger power converter 130, discharger power converter 140 and controller 101. In Figure 1, these are shown as two separate entities, but these may be combined into a single entity featuring the functionality of both. Charger power converter 130 is configured for directing power from the number of CPE devices (not shown) to the energy storage device 30. It will be understood that power may in general be directed to the energy storage device until it is saturated, or until a threshold of stored energy is reached. Discharger power converter 140 is configured for directing power from the energy storage device 30 to the power consuming system 20. Controller 101 is configured for receiving a first input indicating power drawn from the number of CPE devices (not shown). Controller 101 is further configured for receiving a second input indicating operating power for the power consuming system 20. Controller 101 is further configured for receiving a third input indicating available energy in the energy storage device 30. Controller 101 is further configured for, based on the received first, second and third inputs, controlling at least one of the charger power converter 130 and the discharger power converter 140. To this end, connection may be provided between controller 101 and charger power converter 130 and between controller 101 and discharger power converter 140. Also, interfaces may be provided to charger power converter 130 and discharger power converter 140 respectively in order to interface with energy storage device 30 (as shown in Figure 3A). Also, an interface may be provided to controller 101 in order to interface with power consuming system 20 (as shown in Figure 3A).

Figure 2 schematically illustrates a deployment setup for reverse power feeding of one or more embodiments of network nodes (also called remote nodes or remote network nodes) RN according to the present disclosure, including a power control system according to the present disclosure, e.g. power control system 100 shown in Figure 1. Figure 2 shows central office CO, which may be connected to a number of remote network nodes RN, in this example comprising a cabinet RN1 and distribution point unit RN2, which may be connected to each other in a way to allow power conducting. Figure 2 indicates that the connection distance between central office CO and one or more of remote nodes RN may be substantially greater (e.g. 1 to 100 km) than the connection distance between said one or more of remote nodes RN and corresponding customer-side devices (e.g. up to 250 m). As shown in this example, distribution point unit RN2 may be connected to a number of customer premises equipment, CPE, devices. In the present example, three CPE devices - CPE1, CPE2 and CPE3 - are shown, but it will be understood that any number of CPE devices may be present. If no (i.e. zero) CPE devices are present, one or more of remote nodes RN may be configured to operate further on locally stored power from an energy storage device, or to shut down, or to hibernate (e.g. because no or only a reduced communication service should be supplied further). In any of these cases, one or more of remote nodes RN may be configured to notify central office CO, for example using a so-called dying gasp. It will be understood that reverse power feeding may refer to a scheme wherein power is fed from customer-side devices, e.g. CPE devices CPE1-CPE3, in the direction of network nodes, e.g. one or more of remote nodes RN, which are between the customer-side devices and central office CO.

Figure 3A schematically illustrates an embodiment of a network node 10 according to the present disclosure, e.g. a network node of one of the network nodes RN shown in Figure 2. Network node 10 as shown in this example may comprise power control system 100, power consuming system 20, and energy storage device 30. Power control system 100 as shown in this example corresponds to power control system 100 as shown in Figure 1 - therefore, detailed discussion of its components will be omitted here. In Figure 3A a number of connections and interfaces is shown, in accordance with the connections and interfaces described hereinabove with reference to Figure 1.

Figure 3B schematically illustrates a circuit layout of an embodiment of controller 101 according to the present disclosure, e.g. controller 101 shown included in power control system 100 of Figure 1. Figure 3B represents schematically a possible electrical implementation for controller 101, and for power extractor 110. Nevertheless, the skilled person will appreciate that the electrical implementation represented here schematically is for purposes of explanation and clarification only, and should not be construed as limiting implementation of embodiments of a controller according to the present disclosure. Controller 101 as shown in this example may comprise comparator circuit 102, charger controller 103, and discharger controller 104. Comparator circuit 102 as shown in this example may comprise four parts: comparator 105, comparator 106, comparator 107 and comparator 108; it may further comprise connections between comparators 105-108, adapted to execute logic on comparators 105-108. Unless otherwise specified, op-amp symbols shown in Figures 3A-3B have their non-inverting input on top and their inverting input below. Power extractor 110 may for example be configured to extract power from a power splitter, which may be configured for splitting power from a line coupling the network node to a power source equipment device (not shown) included in a CPE device, e.g. one of the CPE devices shown in Figure 2.

Power extractor 110 may comprise power line 111, to which sensing circuit 112 may be connected. Sensing circuit 112 may output a signal V1, for use in comparator circuit 102.

Power extractor 110 may further comprise source power controller 113, to which may be input an input derived from a value V2 indicating operating power for power consuming system 20 (not shown). By comparing the input derived from V2 and an internal reference value VR5, source power controller 113 may output a control signal O1 for controlling source power. The value V2 may for example pertain to the bus voltage for general operation of network node 10 (not shown).

Comparator 105 may receive signal V1, and use this as a first input signal indicating power drawn from the CPE device. In particular, comparator 105 may compare first input signal V1 to reference value VR4, which in this example is set to reference value VR.

Comparator 106 may receive signal V3, and use this as a third input signal indicating available energy in energy storage device 30. In particular, comparator 106 may compare the third input signal V3 to reference value VR3, which in this example is also set to reference value VR, but which may alternatively be set to another value.

Comparators 105 and 106 provide their respective outputs through forward-biased diodes, which combine the respective outputs to be used as input for a comparator in charger controller 103, where it may be compared to an internal reference value VR6, in order to provide output signal O3. Output signal O3 may be used to control charger power converter 130 (not shown), preferably in order to regulate the amount of power being directed from power extractor 110 to energy storage device 30. In this way, because the third input signal V3 ultimately depends on and controls output signal O3, a feedback loop, e.g. in the form of a switch-mode power supply, may be created.

Comparator 107 may receive signal V1, and also use this as a first input signal indicating power drawn from the CPE device. In particular, comparator 107 may compare first input signal V1 to reference value VR1, which in this example is set to reference value VR, but which may alternatively be set to another value.

Comparator 108 may receive signal V2, and use this as a second input signal indicating operating power for power consuming system 20. In particular, comparator 108 may compare second input signal V2 to reference value VR2, which in this example is also set to reference value VR, but which may alternatively be set to another value.

Comparators 107 and 108 provide their respective outputs through one forward-biased and one reverse-biased diode, which combine the respective outputs to be used as input for a comparator in discharger controller 104, where it may be compared to an internal reference value VR7, in order to provide output signal O4. Output signal O4 may be used to control discharger power converter 140 (not shown), preferably in order to reduce the amount of power being directed from energy storage device 30 to power consuming system 20.

In this example, all cited reference values (VR1, VR2, VR3 and VR4) have been set to the same reference value VR. However, it will be understood that any combination of different reference values may be chosen, in order to fine-tune operation of controller 101. For example, a number of different reference values may be chosen, to prefer charging over discharging, or vice versa, or to safeguard power delivery conditions, etc.

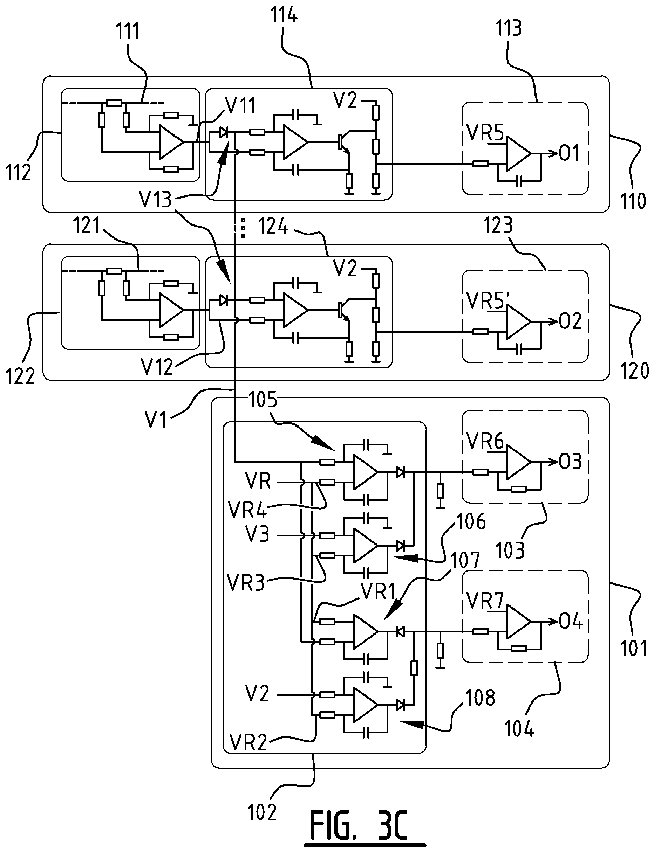

Figure 3C schematically illustrates a circuit layout of another embodiment of controller 101 according to the present disclosure, e.g. controller 101 shown included in power control system 100 of Figure 1. Figure 3C, like Figure 3B, represents schematically a possible electrical implementation for controller 101, and for power extractors 110, 120. Nevertheless, the skilled person will appreciate that the electrical implementation represented here schematically is for purposes of explanation and clarification only, and should not be construed as limiting implementation of embodiments of a controller according to the present disclosure. It will be understood that the circuit layout illustrated in Figure 3C corresponds in large part to the circuit layout illustrated in Figure 3B - therefore, detailed discussion of corresponding parts will be omitted here.

Figure 3C differs from Figure 3B in particular in the inclusion of second power extractor 120 in addition to power extractor 110, and in the inclusion of assorted control circuitry 114, 124. Although only two power extractor 110, 120 are shown in this example, it will be understood that three, four or more power extractors may be present. Power extractors 110, 120 may comprise corresponding control circuits 114, 124. Power extractors 110, 120 may comprise corresponding sensing circuits 112, 122. Sensing circuits 112, 122 may be configured to provide respective outputs V11, V12. Control circuits 114, 124 may be configured to provide as output a controlled signal for input to respective source power controllers 113, 123, derived from a signal V2 representing operating power for power consuming system 20 (not shown). Respective source power controllers 113, 123 may each be configured to compare the input signal with respective internal reference values VR5, VR5', in order to determine respective outputs O1, O2. The respective outputs O1, O2 may be used to control respective source power for respective power extractors 113, 123, and thus to control the power delivered by respective CPE devices.

In this example, control circuits 114 and 124 split off their respective input signals V11 and V12, each through a forward-biased diode, to provide a bus signal V13, which represents the greatest value of all input values (here: V11 and V12 are shown) that are input to the respective control circuits (here: 114 and 124 are shown), and which may be provided to controller 101 as signal V1, representing the greatest power drawn from the number of CPE devices.

This helps to allow the power sources to converge to output substantially the same power, because power output differences among power sources can be remediated, in order to decrease the likelihood of one or more power sources reaching their respective maximum power delivery conditions. In this way, power delivery can be made more efficient.

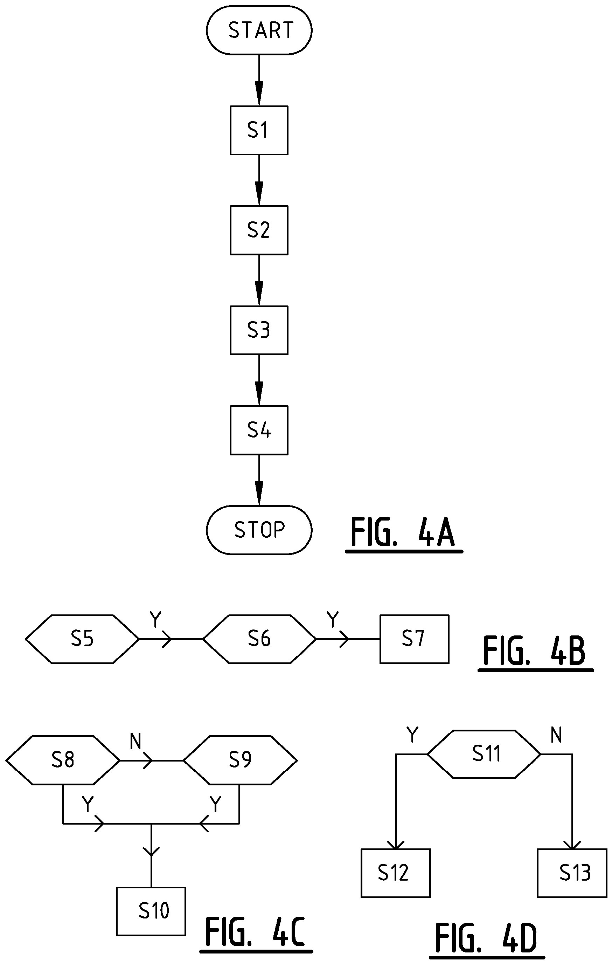

Figures 4A-D schematically illustrate (parts of) flowcharts of embodiments of methods according to the present disclosure.

Figure 4A schematically illustrates a first embodiment of a method according to the present disclosure. The method embodiment comprises operations S1-S4. In operation S1, a first input is received indicating power drawn from the number of CPE devices. Alternatively, in operation S1, the first input may be configured to indicate available power from the number of CPE devices, which may imply that a number of conditions disclosed in the present specification be inverted, as will be understood by the skilled person. In operation S2, a second input is received indicating operating power for the power consuming system. In operation S3, a third input is received indicating available energy in the energy storage device. In operation S4, based on the received first, second and third inputs, it is determined whether or not to direct power from the number of CPE devices to the energy storage device and whether or not to direct power from the energy storage device to the power consuming system.

Figure 4B schematically illustrates a part of a second embodiment of a method according to the present disclosure. The second embodiment may be a further development of the first embodiment shown in Figure 1. The illustrated part may for example be comprised in operation S4 of Figure 1. The method embodiment comprises operations S5-S7. In operation S5, it is determined whether or not the first input is less than a fourth reference value. In operation S6, it is determined whether or not the third input is less than a third reference value. In operation S7, power is directed from the number of CPE devices to the energy storage device. In the embodiment illustrated in Figure 4B operation S6 is shown to take place after operation S5, but this order may be changed.

Figure 4C schematically illustrates a part of a third embodiment of a method according to the present disclosure. The third embodiment may be a further development of the first embodiment shown in Figure 1. The illustrated part may for example be comprised in operation S4 of Figure 1, in addition to or alternatively to the part illustrated in Figure 4B. The method embodiment comprises operations S8-S10. In operation S8, it is determined whether or not the first input is greater than a first reference value. In operation S9, it is determined whether or not the second input is less than a second reference value. In operation S10, power is directed from the energy storage device to the power consuming system. In the embodiment illustrated in Figure 4C operation S9 is shown to take place after operation S8, but this order may be changed.

Figure 4D schematically illustrates a part of a fourth embodiment of a method according to the present disclosure. The fourth embodiment may be a further development of the first embodiment shown in Figure 1. The illustrated part may for example be comprised in operation S4 of Figure 1, in addition to or alternatively to the part illustrated in Figure 4B and/or to the part illustrated in Figure 4C. The method embodiment comprises operations S11-S13. In operation S11, it is determined whether or not the first input is greater than a fifth reference value. In operation S12, a first part of power and a second part of power are directed to the power consuming system. The first part of power stems from the power drawn from the number of CPE devices and the second part of power stems from the available energy in the energy storage device, such that the sum of the first part of power and the second part of power satisfies the operating power for the power consuming system. In operation S13, a first part of power is directed to the power consuming system and simultaneously a second part of power is directed to the energy storage device. Both the first part of power and the second part of power stem from the power drawn from the number of CPE devices. Preferably, the second part of power is directed to the energy storage device using a variable charging current. In a further developed embodiment, the charging current may be varied as a function of the power drawn from the number of CPE devices, and/or as a function of the operating power for the power consuming system.

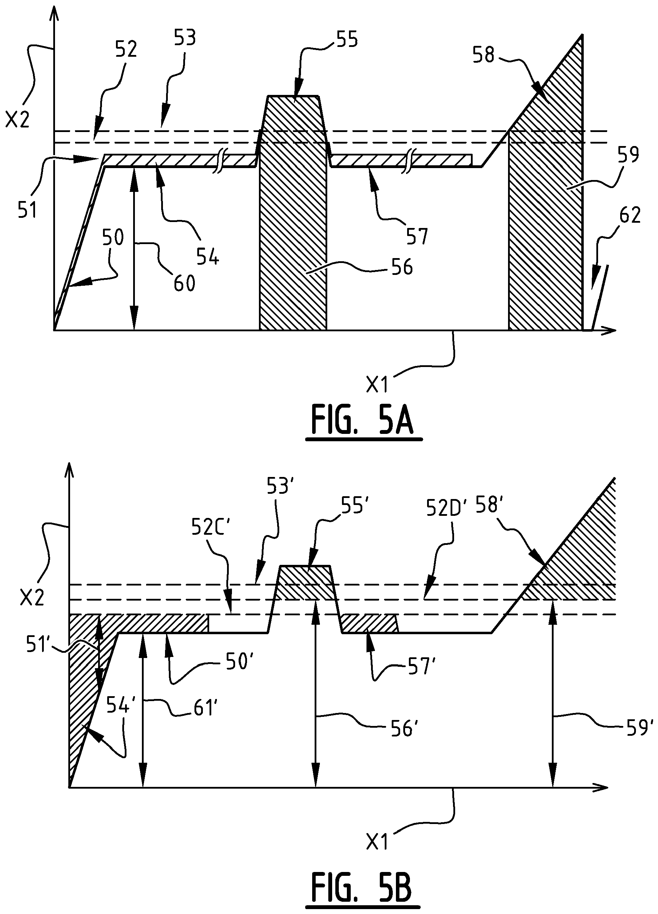

Figures 5A-B schematically illustrate plots showing power control, e.g. as performed by the power control system embodiment of Figure 1. Both plots show power on the vertical axis X2 in function of time on the horizontal axis XI.

In Figure 5A, system power consumption 50 is shown, which is the power that is at some time on axis XI being consumed by power consuming system 20 (not shown). System power consumption 50 varies, as power demand fluctuates. Further, charging current 51 is shown (in terms of power), which is the current at which energy is stored into energy storage device 30 (not shown). In the example shown here, charging current 51 is constant. A first reference value 52 and a second reference value 53 are shown. In this example, second reference value 53 represents a power source maximum level for one or more of the power sources (not shown), and first reference value 52 is chosen lower than second reference value 53 to stabilize system operation through hysteresis. Further, energy is shown to be stored 54, 57 into energy storage device 30, during some charging time interval (shown shaded). Further, power 60 being delivered to power consuming system 20 from the power sources (i.e. the CPE devices) is shown. At some point in time on axis XI, too much power is being demanded from the power sources, leading to deactivation of the respective power source, such that energy storage device 30 is called upon to deliver all required power, here shown as a first part 55 (above second reference value 53) and a second part 56 (below second reference value 53), to maintain system operation (at least temporarily). After system power demand has decreased, power may again be delivered to power consuming system 20 by the power sources, and energy storage device 30 may be charged 57 again. If, after some time, power demand again rises above second reference value 53, again all required power is delivered from energy storage device 30, as a first part 58 and a second part 59. If such power demand remains too high for too long, system operation may be abruptly halted 62, which is undesirable.

In Figure 5B, system power consumption 50' is shown, as in Figure 5A. Further, charging current 51' is shown, which in this example is variable, preferably depending on safely available power from the power sources (not shown). A first reference value 52C' - for charging of energy storage device 30, a second reference value 52D' - for discharging of energy storage device 30, and a third reference value 53' - representing a power source maximum (that is, maximum safely deliverable power of one or more power sources), are shown. Initially, energy storage device 30 is charged 54', ostensibly in less time than in Figure 5A. If, after some time, power demand 50' rises above second reference value 52D', it is determined that power should be delivered to power consuming system 20 as a first part of power 55' and a second part of power 56', wherein the first part of power 55' is delivered by energy storage device 30 and the second part of power 56' is delivered by one or more power sources (i.e. CPE devices). In this example, second reference value 52D' has been chosen safely below power source maximum 53', to improve safety guarantees. It can be seen from Figure 5B that only a safe portion (second part 56') of all required power is delivered by the power sources, such that these are in no (or less) danger of exceeding their power delivery conditions. If, after some time, power demand decreases below second reference value 52D', it may be determined that power may again be safely delivered fully by the power sources. Then, if, after some more time, power demand further decreases below first reference value 52C', it may be determined that energy storage device 30 may again be safely charged 57', while simultaneously power is directed from the power sources to power consuming system 20. It can be deduced from Figure 5B that, in comparison with Figure 5A, much less time is needed to recharge 57' energy storage device 30 again, because much less power has been expended (in 55') by it. If, after some time, power demand again rises above second reference value 52D', again the required power is delivered in two parts: a first part 58' from energy storage device 30, and a second part 59' from the power sources. Compared to Figure 5A, such power demand can remain higher for longer time, without endangering system operation as significantly as in Figure 5A.

Embodiments of the present disclosure as disclosed above may be advantageously applied in a context of reverse power feeding, especially where power interrupts may occur, and especially where time domain multiplexing powering is applied.

In other words, embodiments of the present disclosure may strive to improve size requirements of an energy storage device (and thus to improve costs), *inter alia* based on the insight of controlling energy release. Further, embodiments of the present disclosure may strive to improve robustness against power interrupts, *inter alia* based on the insight of controlling energy storing, by decreasing an interval of interrupts due to increased energy storage speed.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present disclosure. It will thus be appreciated that those skilled in the art will be able to devise various arrangements that, although not explicitly described or shown herein, embody the principles of the present disclosure and are included within its scope. Furthermore, all examples recited herein are principally intended expressly to be only for pedagogical purposes to aid the reader in understanding the principles of the present disclosure and the concepts contributed by the inventor(s) to furthering the art, and are to be construed as being without limitation to such specifically recited examples and conditions. Moreover, all statements herein reciting principles, aspects, and embodiments of the present disclosure, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present disclosure. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present disclosure and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present disclosure can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present disclosure, expressions such as "comprise", "include", "have", "may comprise", "may include", or "may have" indicate existence of corresponding features but do not exclude existence of additional features.

In the present disclosure, the expression "A and/or B" may be taken to mean "at least one of A and B". In particular, this may include just A, just B, or both A and B. In some contexts, this may include one or more of just A, one or more of just B, or both one or more of A and one or more of B.

Whilst the principles of the present disclosure have been set out above in connection with specific embodiments, it is to be understood that this description is merely made by way of example and not as a limitation of the scope of protection which is determined by the appended claims.

## Claims

1. A power control system for controlling reverse power feeding of a network node from a plural number of customer premises equipment, CPE, devices; the number of CPE devices being subject to power delivery conditions; wherein the network node comprises a power consuming system and an energy storage device; wherein the power control system comprises:
- a charger power converter configured for directing power from the number of CPE devices to the energy storage device;
- a discharger power converter configured for directing power from the energy storage device to the power consuming system; and
- **characterized by** a controller configured for:
- receiving a first input indicating greatest power drawn from the number of CPE devices;
- receiving a second input indicating operating power for the power consuming system;
- receiving a third input indicating available energy in the energy storage device; and
- based on the received first, second and third inputs, controlling at least one of the charger power converter and the discharger power converter.

2. The power control system of claim 1, wherein the controller is configured for activating the discharger power converter if the first input is greater than a first reference value or if the second input is less than a second reference value.

3. The power control system of claim 2, wherein the controller is configured for controlling the discharger power converter to regulate the power being directed from the energy storage device based on a difference between at least one input of the first and second inputs and its corresponding reference value of the first and second reference values.

4. The power control system of any one of the previous claims, wherein the controller is configured for activating the charger power converter if the first input is less than a fourth reference value and if the third input is less than a third reference value.

5. The power control system of claim 4, wherein the controller is configured for controlling the charger power converter to regulate the power being directed to the energy storage device based on a difference between at least one input of the first and third inputs and its corresponding reference value of the fourth and third reference values.

6. The power control system of any one of the previous claims, wherein the controller is configured for at least one of the following:
- if the first input is greater than a fifth reference value, directing to the power consuming system a first part of power and a second part of power, the first part of power stemming from the power drawn from the number of CPE devices and the second part of power stemming from the available energy in the energy storage device, such that the sum of the first part of power and the second part of power satisfies the operating power for the power consuming system; and
- if the first input is less than the fifth reference value, directing simultaneously a first part of power to the power consuming system and a second part of power to the energy storage device, both the first part of power and the second part of power stemming from the power drawn from the number of CPE devices, wherein the second part of power is directed to the energy storage device using a variable charging current.

7. A network node for connecting a central office and a plural number of customer premises equipment, CPE, devices, via a communication network; the network node comprising a power control system according to any one of the previous claims; the power control system being configured to be coupled to the number of CPE devices in order to receive power delivered by the number of CPE devices.

8. A method for controlling reverse power feeding of a network node from a plural number of customer premises equipment, CPE, devices; the number of CPE devices being subject to power delivery conditions; the network node comprising a power consuming system and an energy storage device; wherein the method is **characterized by**:
- receiving a first input indicating greatest power drawn from the number of CPE devices;
- receiving a second input indicating operating power for the power consuming system;
- receiving a third input indicating available energy in the energy storage device; and
- based on the received first, second and third inputs, determining whether or not to direct power from the number of CPE devices to the energy storage device and whether or not to direct power from the energy storage device to the power consuming system.

9. The method of claim 8, comprising directing power from the energy storage device to the power consuming system if the first input is greater than a first reference value or if the second input is less than a second reference value.

10. The method of claim 9, comprising regulating the power being directed from the energy storage device based on a difference between at least one input of the first and second inputs and its corresponding reference value of the first and second reference values.

11. The method of any one of the claims 8-10, comprising directing power from the number of CPE devices to the energy storage device if the first input is less than a fourth reference value and if the third input is less than a third reference value.

12. The method of claim 11, comprising regulating the power being directed to the energy storage device based on a difference between at least one input of the first and third inputs and its corresponding reference value of the fourth and third reference values.

13. The method of any one of the claims 8-12, comprising at least one of the following:
- if the first input is greater than a fifth reference value, directing to the power consuming system a first part of power and a second part of power, the first part of power stemming from the power drawn from the number of CPE devices and the second part of power stemming from the available energy in the energy storage device, such that the sum of the first part of power and the second part of power satisfies the operating power for the power consuming system; and
- if the first input is less than the fifth reference value, directing simultaneously a first part of power to the power consuming system and a second part of power to the energy storage device, both the first part of power and the second part of power stemming from the power drawn from the number of CPE devices, wherein the second part of power is directed to the energy storage device using a variable charging current.

14. A computer program product comprising a computer-executable program of instructions for performing, when executed on a computer, the steps of the method of any one of the claims 8-13.

15. A controller for use in a power control system for controlling reverse power feeding of a network node from a plural number of customer premises equipment, CPE, devices; the number of CPE devices being subject to power delivery conditions; the network node comprising a power consuming system and an energy storage device; wherein the power control system comprises a charger power converter configured for directing power from the number of CPE devices to the energy storage device, and a discharger power converter configured for directing power from the energy storage device to the power consuming system; and **characterized by** the controller which is configured for:
- receiving a first input indicating greatest power drawn from the number of CPE devices;
- receiving a second input indicating operating power for the power consuming system;
- receiving a third input indicating available energy in the energy storage device; and
- based on the received first, second and third inputs, controlling at least one of the charger power converter and the discharger power converter.

## Patentansprüche

1. Leistungsregelungssystem zum Steuern der umgekehrten Leistungseinspeisung eines Netzwerkknotens von einer Mehrzahl von CPEs, Customer Premises Equipment Devices; wobei die Anzahl von CPEs abhängt von den Leistungseinspeisungsbedingungen; wobei der Netzwerkknoten umfasst ein Leistungsaufnahmesystem und eine Energiespeichervorrichtung; wobei das Leistungsregelungssystem umfasst:
- einen Ladegerät-Stromrichter, der konfiguriert ist zum Lenken der Leistung von der Anzahl von CPEs zur Energiespeichervorrichtung
- einen Entlader-Stromrichter, der konfiguriert ist zum Lenken der Leistung von der Energiespeichervorrichtung zum Leistungsaufnahmesystem und
- **gekennzeichnet durch** einen Controller, der konfiguriert ist zum:- Empfangen eines ersten Eingangs, der die größte Leistungsaufnahme von der Anzahl von CPEs anzeigt
- Empfangen eines zweiten Eingangs, der die Betriebsleistung für das Leistungsaufnahmesystem anzeigt
- Empfangen eines dritten Eingangs, der die verfügbare Energie in der Energiespeichervorrichtung anzeigt und
- basierend auf dem empfangenen ersten, zweiten und dritten Eingang, Steuern mindestens eines aus Ladegerät-Stromrichter und Entlader-Stromrichter

2. Leistungsregelungssystem nach Anspruch 1, wobei der Controller konfiguriert ist zum Aktivieren des Entlader-Stromrichters, wenn der erste Eingang größer ist als ein erster Referenzwert oder wenn der zweite Eingang geringer ist als ein zweiter Referenzwert.

3. Leistungsregelungssystem nach Anspruch 2, wobei der Controller konfiguriert ist zum Steuern des Entlader-Stromrichters zum Regulieren der Leistung, die von der Energiespeichervorrichtung gelenkt wird auf Grundlage einer Differenz zwischen mindestens einem Eingang aus dem ersten und zweiten Eingang und seinem entsprechenden Referenzwert aus dem ersten und zweiten Referenzwert.

4. Leistungsregelungssystem nach einem beliebigen der vorhergehenden Ansprüche, wobei der Controller konfiguriert ist zum Aktivieren des Ladegerät-Stromrichters, wenn der erste Eingang geringer ist als ein vierter Referenzwert oder wenn der dritte Eingang geringer ist als ein dritter Referenzwert.

5. Leistungsregelungssystem nach Anspruch 4, wobei der Controller konfiguriert ist zum Steuern des Ladegerät-Stromrichters zum Regulieren der Leistung, die von der Energiespeichervorrichtung gelenkt wird auf Grundlage einer Differenz zwischen mindestens einem Eingang aus dem ersten und dritten Eingang und seinem entsprechenden Referenzwert aus dem vierten und dritten Referenzwert.

6. Leistungsregelungssystem nach einem beliebigen der vorhergehenden Ansprüche, wobei der Controller konfiguriert ist für mindestens eines der folgenden:
- wenn der erste Eingang größer ist als ein fünfter Referenzwert, Lenken auf das Leistungsaufnahmesystem eines ersten Teils der Leistung und eines zweiten Teils der Leistung, wobei der erste Teil der Leistung aus der Leistungsaufnahme von der Anzahl von CPEs stammt und der zweite Teil der Leistung von der verfügbaren Energie in der Energiespeichervorrichtung stammt, sodass die Summe aus erstem Teil der Leistung und zweitem Teil der Leistung die Betriebsleistung für das Leistungsaufnahmesystem deckt und
- wenn der erste Eingang geringer ist als der fünfte Referenzwert, gleichzeitiges Lenken eines ersten Teils der Leistung zum Leistungsaufnahmesystem und eines zweiten Teils der Energie an die Energiespeichervorrichtung, wobei sowohl der erste Teil als auch der zweite Teil der Energie aus der Leistungsaufnahme von der Anzahl von CPEs stammen, wobei der zweite Teil der Energie zur Energiespeichervorrichtung gelenkt wird unter Verwenden eines variablen Ladestroms

7. Netzwerkknoten zum Verbinden einer Vermittlungsstelle und einer Vielzahl von CPEs (Customer Premises Equipment Devices) über ein Kommunikationsnetzwerk; wobei der Netzwerkknoten umfasst ein Leistungsregelungssystem nach einem beliebigen der vorhergehenden Ansprüche; wobei das Leistungsregelungssystem konfiguriert ist zum Koppeln mit der Anzahl von CPEs, um Leistung zu erhalten, die von der Anzahl von CPEs geliefert wird.

8. Verfahren zum Steuern der umgekehrten Leistungseinspeisung eines Netzwerkknotens von einer Mehrzahl von CPEs, Customer Premises Equipment Devices); wobei die Anzahl von CPEs abhängt von den Leistungseinspeisungsbedingungen; wobei der Netzwerkknoten umfasst ein Leistungsaufnahmesystem und eine Energiespeichervorrichtung; wobei das Verfahren **gekennzeichnet ist durch**:
- Empfangen eines ersten Eingangs, der die größte Leistungsaufnahme von der Anzahl von CPEs anzeigt
- Empfangen eines zweiten Eingangs, der die Betriebsleistung für das Leistungsaufnahmesystem anzeigt
- Empfangen eines dritten Eingangs, der die verfügbare Energie in der Energiespeichervorrichtung anzeigt und
- Bestimmen auf Grundlage des empfangenen ersten, zweiten und dritten Eingangs, ob die Leistung von der Anzahl von CPEs an die Energiespeichervorrichtung gelenkt werden soll oder nicht und ob die Leistung von der Energiespeichervorrichtung an das Leistungsaufnahmesystem gelenkt werden soll oder nicht

9. Leistungsregelungssystem nach Anspruch 8, wobei der Controller konfiguriert ist zum Aktivieren des Entlader-Stromrichters, wenn der erste Eingang größer ist als ein erster Referenzwert oder wenn der zweite Eingang geringer ist als ein zweiter Referenzwert.

10. Verfahren nach Anspruch 9, umfassend das Regulieren der Leistung, die von der Energiespeichervorrichtung gelenkt wird auf Grundlage einer Differenz zwischen mindestens einem Eingang aus dem ersten und zweiten Eingang und seinem entsprechenden Referenzwert aus dem ersten und zweiten Referenzwert.

11. Verfahren nach einem beliebigen der Ansprüche 8-10, umfassend das Lenken der Leistung von der Anzahl von CPEs zur Energiespeichervorrichtung, wenn der erste Eingang geringer ist als ein vierter Referenzwert oder wenn der dritte Eingang geringer ist als ein dritter Referenzwert.

12. Verfahren nach Anspruch 11, umfassend das Regulieren der Leistung, die zu der Energiespeichervorrichtung gelenkt wird auf Grundlage einer Differenz zwischen mindestens einem Eingang aus dem ersten und dritten Eingang und seinem entsprechenden Referenzwert aus dem vierten und dritten Referenzwert.

13. Verfahren nach einem beliebigen der Ansprüche 8-12, umfassend mindestens eines der folgenden:
- wenn der erste Eingang größer ist als ein fünfter Referenzwert, Lenken auf das Leistungsaufnahmesystem eines ersten Teils der Leistung und eines zweiten Teils der Leistung, wobei der erste Teil der Leistung aus der Leistungsaufnahme von der Anzahl von CPEs stammt und der zweite Teil der Leistung von der verfügbaren Energie in der Energiespeichervorrichtung stammt, sodass die Summe aus erstem Teil der Leistung und zweitem Teil der Leistung die Betriebsleistung für das Leistungsaufnahmesystem deckt und
- wenn der erste Eingang geringer ist als der fünfte Referenzwert, gleichzeitiges Lenken eines ersten Teils der Leistung zum Leistungsaufnahmesystem und eines zweiten Teils der Energie an die Energiespeichervorrichtung, wobei sowohl der erste Teil als auch der zweite Teil der Energie aus der Leistungsaufnahme von der Anzahl von CPEs stammen, wobei der zweite Teil der Energie zur Energiespeichervorrichtung gelenkt wird unter Verwenden eines variablen Ladestroms

14. Computer-Programmprodukt, umfassend ein computerausführbares Programm von Befehlen zum Durchführen, wenn es auf einem Computer ausgeführt wird, der Schritte des Verfahrens nach einem beliebigen der Ansprüche 8-13.

15. Controller für den Gebrauch in einem Leistungsregelungssystem zum Steuern der umgekehrten Leistungseinspeisung eines Netzwerkknotens von einer Mehrzahl von CPEs, Customer Premises Equipment Devices; wobei die Anzahl von CPEs abhängt von den Leistungseinspeisungsbedingungen; wobei der Netzwerkknoten umfasst ein Leistungsaufnahmesystem und eine Energiespeichervorrichtung; wobei das Leistungsregelungssystem einen Ladegerät-Stromrichter umfasst, der konfiguriert ist zum Lenken der Leistung von der Anzahl von CPEs zur Energiespeichervorrichtung, und einen Entlader-Stromrichter, der konfiguriert ist zum Lenken der Leistung von der Energiespeichervorrichtung zum Leistungsaufnahmesystem; und **gekennzeichnet durch** den Controller, der konfiguriert ist zum:
- Empfangen eines ersten Eingangs, der die größte Leistungsaufnahme von der Anzahl von CPEs anzeigt
- Empfangen eines zweiten Eingangs, der die Betriebsleistung für das Leistungsaufnahmesystem anzeigt
- Empfangen eines dritten Eingangs, der die verfügbare Energie in der Energiespeichervorrichtung anzeigt und
- basierend auf dem empfangenen ersten, zweiten und dritten Eingang, Steuern mindestens eines aus Ladegerät-Stromrichter und Entlader-Stromrichter

## Revendications

1. Système de commande d'énergie pour commander l'alimentation en énergie inverse d'un noeud de réseau à partir d'une pluralité de dispositifs d'équipement des locaux d'abonné, CPE ; le nombre de dispositifs CPE étant soumis à des conditions de distribution d'énergie ; le noeud de réseau comprenant un système consommateur d'énergie et un dispositif de stockage d'énergie ; le système de commande d'énergie comprenant :
- un convertisseur d'énergie de chargeur configuré pour diriger l'énergie à partir de la pluralité de dispositifs CPE vers le dispositif de stockage d'énergie ;
- un convertisseur d'énergie de déchargeur configuré pour diriger l'énergie à partir du dispositif de stockage d'énergie vers le système consommateur d'énergie ; et
- **caractérisé par** un contrôleur configuré pour :
- recevoir une première entrée indiquant une énergie maximum tirée de la pluralité de dispositifs CPE ;
- recevoir une deuxième entrée indiquant une énergie de fonctionnement pour le système consommateur d'énergie ;
- recevoir une troisième entrée indiquant une énergie disponible dans le dispositif de stockage d'énergie ; et
- en fonction des première, deuxième et troisième entrées reçues, commander le convertisseur d'énergie de chargeur et/ou le convertisseur d'énergie de déchargeur.

2. Système de commande d'énergie selon la revendication 1, dans lequel le contrôleur est configuré pour activer le convertisseur d'énergie de déchargeur si la première entrée est supérieure à une première valeur de référence ou si la deuxième entrée est inférieure à une deuxième valeur de référence.

3. Système de commande d'énergie selon la revendication 2, dans lequel le contrôleur est configuré pour commander le convertisseur d'énergie de déchargeur pour réguler l'énergie dirigée à partir du dispositif de stockage d'énergie en fonction d'une différence entre au moins une entrée parmi les première et deuxième entrées et sa valeur de référence correspondante parmi les première et deuxième valeurs de référence.

4. Système de commande d'énergie selon l'une quelconque des revendications précédentes, dans lequel le contrôleur est configuré pour activer le convertisseur d'énergie de chargeur si la première entrée est inférieure à une quatrième valeur de référence et si la troisième entrée est inférieure à une troisième valeur de référence.

5. Système de commande d'énergie selon la revendication 4, dans lequel le contrôleur est configuré pour commander le convertisseur d'énergie de chargeur pour réguler l'énergie dirigée vers le dispositif de stockage d'énergie en fonction d'une différence entre au moins une entrée parmi les première et troisième entrées et sa valeur de référence correspondante parmi les quatrième et troisième valeurs de référence.

6. Système de commande d'énergie selon l'une quelconque des revendications précédentes, dans lequel le contrôleur est configuré pour au moins une des étapes suivantes :
- si la première entrée est supérieure à une cinquième valeur de référence, diriger vers le système consommateur d'énergie une première partie d'énergie et une seconde partie d'énergie, la première partie d'énergie provenant de l'énergie tirée de la pluralité de dispositifs CPE et la seconde partie d'énergie provenant de l'énergie disponible dans le dispositif de stockage d'énergie, de sorte que la somme de la première partie d'énergie et de la seconde partie d'énergie satisfasse l'énergie de fonctionnement pour le système consommateur d'énergie ; et
- si la première entrée est inférieure à la cinquième valeur de référence, diriger simultanément une première partie d'énergie vers le système consommateur d'énergie et une seconde partie d'énergie vers le dispositif de stockage d'énergie, la première partie d'énergie et la seconde partie d'énergie provenant de l'énergie tirée de la pluralité de dispositifs CPE, la seconde partie d'énergie étant dirigée vers le dispositif de stockage d'énergie en utilisant un courant de charge variable.

7. Noeud de réseau pour connecter un central et une pluralité de dispositifs d'équipement des locaux d'abonné, CPE, par l'intermédiaire d'un réseau de communication ; le noeud de réseau comprenant un système de commande d'énergie selon l'une quelconque des revendications précédentes ; le système de commande d'énergie étant configuré pour être couplé à la pluralité de dispositifs CPE afin de recevoir une énergie délivrée par la pluralité de dispositifs CPE.

8. Procédé de commande de l'alimentation en énergie inverse d'un noeud de réseau à partir d'une pluralité de dispositifs d'équipement des locaux d'abonné, CPE ; le nombre de dispositifs CPE étant soumis à des conditions de distribution d'énergie ; le noeud de réseau comprenant un système consommateur d'énergie et un dispositif de stockage d'énergie ; le procédé étant **caractérisé par** les étapes suivantes :
- recevoir une première entrée indiquant une énergie maximum tirée de la pluralité de dispositifs CPE ;
- recevoir une deuxième entrée indiquant une énergie de fonctionnement pour le système consommateur d'énergie ;
- recevoir une troisième entrée indiquant une énergie disponible dans le dispositif de stockage d'énergie ; et
- en fonction des première, deuxième et troisième entrées reçues, déterminer si l'énergie doit être dirigée ou non à partir de la pluralité de dispositifs CPE vers le dispositif de stockage d'énergie et si l'énergie doit être dirigée ou non à partir du dispositif de stockage d'énergie vers le système consommateur d'énergie.

9. Procédé selon la revendication 8, consistant à diriger l'énergie à partir du dispositif de stockage d'énergie vers le système consommateur d'énergie si la première entrée est supérieure à une première valeur de référence ou si la deuxième entrée est inférieure à une deuxième valeur de référence.

10. Procédé selon la revendication 9, comprenant la régulation de l'énergie dirigée à partir du dispositif de stockage d'énergie en fonction d'une différence entre au moins une entrée parmi les première et deuxième entrées et sa valeur de référence correspondante parmi les première et deuxième valeurs de référence.

11. Procédé selon l'une quelconque des revendications 8 à 10, consistant à diriger l'énergie à partir de la pluralité de dispositifs CPE vers le dispositif de stockage d'énergie si la première entrée est inférieure à une quatrième valeur de référence et si la troisième entrée est inférieure à une troisième valeur de référence.

12. Procédé selon la revendication 11, comprenant la régulation de l'énergie dirigée vers le dispositif de stockage d'énergie en fonction d'une différence entre au moins une entrée parmi les première et troisième entrées et sa valeur de référence correspondante parmi les quatrième et troisième valeurs de référence.

13. Procédé selon l'une quelconque des revendications 8 à 12, comprenant au moins une des étapes suivantes :
- si la première entrée est supérieure à une cinquième valeur de référence, diriger vers le système consommateur d'énergie une première partie d'énergie et une seconde partie d'énergie, la première partie d'énergie provenant de l'énergie tirée de la pluralité de dispositifs CPE et la seconde partie d'énergie provenant de l'énergie disponible dans le dispositif de stockage d'énergie, de sorte que la somme de la première partie d'énergie et de la seconde partie d'énergie satisfasse l'énergie de fonctionnement pour le système consommateur d'énergie ; et
- si la première entrée est inférieure à la cinquième valeur de référence, diriger simultanément une première partie d'énergie vers le système consommateur d'énergie et une seconde partie d'énergie vers le dispositif de stockage d'énergie, la première partie d'énergie et la seconde partie d'énergie provenant de l'énergie tirée de la pluralité de dispositifs CPE, la seconde partie d'énergie étant dirigée vers le dispositif de stockage d'énergie en utilisant un courant de charge variable.

14. Produit de programme informatique comprenant un programme exécutable par un ordinateur d'instructions pour exécuter, lorsque le programme est exécuté sur un ordinateur, les étapes du procédé selon l'une quelconque des revendications 8 à 13.

15. Contrôleur à utiliser dans un système de commande d'énergie pour commander l'alimentation en énergie inverse d'un noeud de réseau à partir d'une pluralité de dispositifs d'équipement des locaux d'abonné, CPE ; le nombre de dispositifs CPE étant soumis à des conditions de distribution d'énergie ; le noeud de réseau comprenant un système consommateur d'énergie et un dispositif de stockage d'énergie ; le système de commande d'énergie comprenant un convertisseur d'énergie de chargeur configuré pour diriger l'énergie à partir de la pluralité de dispositifs CPE vers le dispositif de stockage d'énergie, et un convertisseur d'énergie de déchargeur configuré pour diriger l'énergie à partir du dispositif de stockage d'énergie vers le système consommateur d'énergie ; et **caractérisé en ce que** le contrôleur est configuré pour :
- recevoir une première entrée indiquant une énergie maximum tirée de la pluralité de dispositifs CPE ;
- recevoir une deuxième entrée indiquant une énergie de fonctionnement pour le système consommateur d'énergie ;
- recevoir une troisième entrée indiquant une énergie disponible dans le dispositif de stockage d'énergie ; et
- en fonction des première, deuxième et troisième entrées reçues, commander le convertisseur d'énergie de chargeur et/ou le convertisseur d'énergie de déchargeur.
